# EUROPEAN PATENT SPECIFICATION

(11) **EP 0 832 563 B1**
(45) Date of publication and mention of the grant of the patent: **29.03.2000**
(21) Application number: 97610034.7
(22) Date of filing: 03.09.1997
(51) Int. Cl.: A22B 5/00

(54) **Method of mechanically boning a fore end**
Verfahren zum mechanischen Ausbeinen eines Vorderteils
Procédé de désossement mécanisé d'un quartier avant

(30) Priority: 26.09.1996 DK 104796
(43) Date of publication of application: 01.04.1998
(73) Proprietor: Slagteriernes Forskningsinstitut, 4000 Roskilde (DK)
(72) Inventor: Folkmann, Peter, 4140 Borup (DK); Rasmussen, Finn, 5540 Ullerslev (DK)

(56) References cited:
- EP-A- 0 719 501
- WO-A-91/04670
- WO-A-94/19958
- FR-A- 2 147 359
- FR-A- 2 513 080

## Description

The present invention relates to a method for mechanically boning a fore end comprising the operation of removing the shank bone from a fore end.

The processing of fore ends in the boning rooms of meat processing plants comprises a number of manual operations, the purpose of which is to remove bones, gristles and sinews, and to separate and trim the muscles to achieve cuts of a high value.

The operations, which may for instance include removal of the neck bone and ribs in one piece, are very complicated. They require experienced and skilful operators to achieve a good yield of meat. The operations also require use of strong forces, especially by the extraction of the shoulder blade. There has long been a wish to mechanize the process, but so far only various types of auxiliary equipments have been suggested. Each type can only perform a small part of the operations.

There are for instance machines and equipments which can extract a shoulder blade. DK-C-144.404 (Slagteriernes Forskningsinstitut) describes an equipment, which by means of a hook extracts the shoulder blade from a bacon side. First, the humerus bone is separated manually from the shoulder blade. Then, the shoulder blade is extracted in the longitudinal direction of the blade in such a way that the shoulder blade pocket remains intact. This is essential for bacon sides. EP-B-0 468 010 (Slagteriernes Forskningsinstitut) describes an equipment for extraction of the shoulder blade from a fore end, which is to be separated into traditional cuts. The equipment extracts the shoulder blade by means of a hook which is placed around the neck of the bone. The extraction is then performed in a direction at right angles to the plane of the shoulder blade. This and other types of equipment known so far are highly specialized. They can only perform a certain part of the manufacturing process or may require extensive, manual preparatory work.

FR-A-2.147.359 (Schlumberger) relates to a machine for separating the shoulder part from a forequarter which is suspended by the shank in a clamp device arranged beneath a rail for suspensions hooks. A cutting tool mounted on the free end of a piston rod separates the shoulder part from the remainder of the quarter detaching the meat along the shoulder blade. The clamp device and cutting tool are mounted in a frame which also carries means for positioning and maintaining the quarter in a predetermined position.

EP-A-0 719 501 (Roser Laromaine) describes a machine for detaching the shoulder blade from a slaughtered animal. The machine comprises a supporting surface, means for holding the shoulder against the surface and a hinged arm for pulling on the shoulder blade. At its free end the arm is provided with a clamp element that grips the blade and then detached it from the shoulder as the arm is rotated to an inclined position.

WO-A-9104670 (University of Bristol) relates to a method for separating e.g. meat from bone by means of a cutter controlled by a robot. The cutter is moved in the direction of the bone. When in contact with the bone, the cutter cuts substantially parallel to the interface between the bone and the meat separating the materials. The force of the cutter on the bone is measured, stored in a memory and used for controlling the robot.

The use of the various known types of equipment in the processing of fore ends will demand subjecting the fore end to alternating manual and mechanized operations.

The only equipment known today that is able to bone fore ends in one process uses a press with two matrices that squeeze the meat away from the shoulder blade, the shank bone and the humerus bone, but not from the surface bones. Most meat processing plants prefer to retain the manual boning operation, as the equipment damages the structure of the meat, resulting in meat of a lower value. Moreover, the equipment will result in splinters of bone in the meat.

The purpose of the present invention is to provide a method by which the shank bone of a fore end is removed in a mechanized way without making extensive manual operations before and particularly during the boning process necessary, and an equivalent quality and yield of meat is achieved as by a manual boning operation.

This is obtained by the method of the invention which is characterized in that the operation of removing the shank bone comprises the steps of:
(a) orientation and fixation of a fore end,
(b) determining the position of the visible head of the shank bone, preferably in a plane which is at right angles to the longitudinal direction of the shank bone,
(c) positioning a first tool in relation to the head,
(d) moving the tool in to the head and bringing the tool to grip around said head,
(e) guided by the shank bone, performing a cutting operation along the bone by means of a device which is mounted on the tool, while retaining the grip of the tool around the head during this cutting operation and the cutting operation mentioned below,
(f) guided by the shank bone, performing a cutting operation through the meat located above the bone by means of a device which is mounted on the tool, if desired, and
(g) removing the shank bone from the fore end by means of the tool, which then releases the bone.

The method of the invention makes it possible to remove the shank bone from a fore end in a relatively simple way. The positioning of the first tool is controlled by a fixed point related to the head of the shank bone, and after the positioning the bone is gripped by the tool in the bone part, and held by the tool while a cutting operation is performed along the bone, guided by this. The only things needed to start the removal operation are that the fore end is orientated and that the position of an anatomical fixed point related to the shank bone can be determined.

The equipment known at present is unfitted for removal of the humerus bone in a mechanized process, when demands are made for meat quality, yield and high production rate. However, the humerus bone can be loosened in the fore end in connection with the removal of the shank bone, which facilitates a subsequent, manual removal considerably.

In an embodiment of the method of the invention the humerus bone is loosened from a fore end in an operation which after steps (a) to (f) furter comprises the steps of:
- moving a second tool in to the head of the humerus bone adjacent to the shank bone and bringing the tool to grip around the head, while retaining the grip of the first tool around the visible head of the shank bone,
- guided by the humerus bone, performing a cutting operation along this by means of a device which is mounted on the tool (e.g. starting from the fixed head of the humerus bone and ending at the other head of the bone),
- guided by the humerus bone, performing a cutting operation through the meat located above the bone, if desired, by means of a device which is mounted on the tool (e.g. starting from the fixed head of the humerus bone and ending at the other head of the bone),
- performing step (g), and
- turning the humerus bone by means of the second tool, so that one end projects from the meat, after which the tool releases the bone.

To facilitate the removal of a bone from the fore end, the sinews that are immediately available for the tool are preferably cut through or torn across. Therefore, the tools are preferably designed to cut through or tear across sinews at the area of the bone where the tool grips the bone.

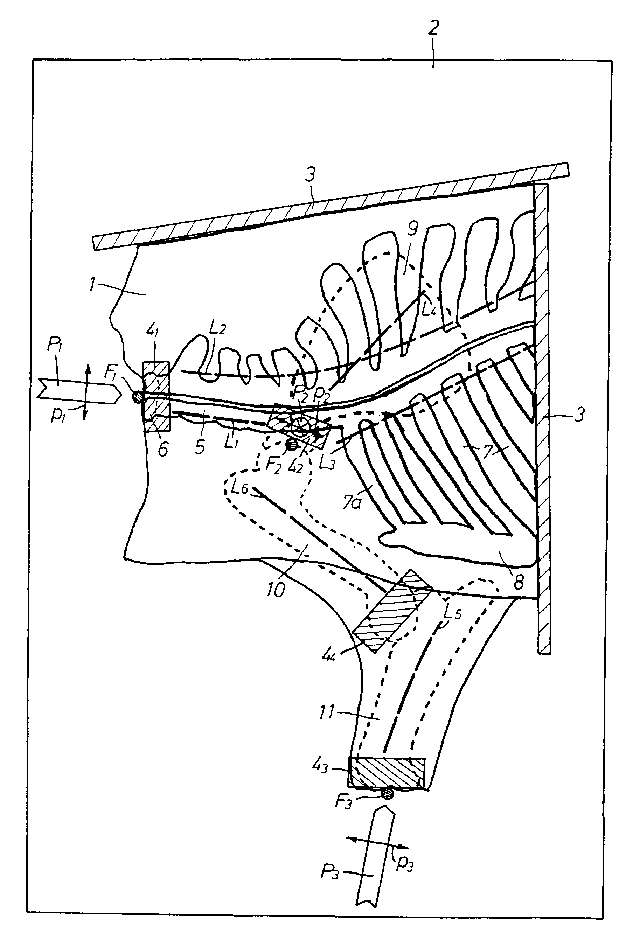

The invention is described in further detail in the following, with reference to the drawing that illustrates an embodiment of a method for boning a fore end.

### Orientation of fore end

Before the mechanical boning operation is started, the fore end 1 is orientated. Lying on a conveyor belt 2 it is conveyed into a work station and brought to rest against two stop plates 3. The fore end is then fixed by means of stop and clamping devices known per se.

The three boning processes described below are based upon determining the position of a fixed point F₁, F₂, and F₃ respectively, positioning of a tool with a gripping device 4₁, 4₂ and 4₃ in relation to the fixed point, introduction of the tool to the fixed point bone in the direction indicated by the arrows P₁, P₂ and P₃ respectively (P₂ at right angles to the plane of the paper), placing the jaws of the gripping device around a part of the bone, and cutting along the fixed bone by means of devices which are mounted on the tool and which guide along the bone. The position of the anatomical fixed point being used in the process is determined by means of systems known per se, e.g. an electronic image recording, a mechanical sensor or a bone detector. It is sufficient to know the position of the fixed point in a plane that is at right angles to the longitudinal direction of the bone (neck bone, shank bone) or in the plane of the bone (shoulder blade). The position of the tool that is used in the process is adjusted in accordance with the determined position of the fixed point, in the direction indicated by the arrows p₁, p₂ and p₃ respectively. The positioning and introduction of the tool can be performed by means of pneumatic, electric or hydraulic cylinder units, or manipulators with two or more degrees of freedom. Preferably, pneumatic, electric or hydraulic cylinder units are used to move cutting devices, which are guided along the bone. The devices may be moved in a mainly straight line.

The three processes can take place in the same or in different work stations. In the following it is assumed that the fore end is orientated and fixed, and that the same work station is used for all three processes.

### Removal of surface bones

Surface bones in a fore end include a neck bone 5 (cervical and dorsal vertebrae) with neck joint 6 and ribs 7 having a chest bone 8. A system determines the position F₁ of the neck joint in a plane that is at right angles to the longitudinal direction of the neck bone. A tool with a gripping device 4₁ is positioned in the direction p dependent on the determined position of the fixed point. The tool is moved towards the neck joint in the direction of arrow P₁, i.e. mainly in the same direction as the longitudinal direction of the neck bone. When the gripping device 4, is opposite the bones, the neck joint 6 and/or the neck bone 5 are fixed. The neck joint is separated from the neck bone, e.g. by means of a pair of tongs built into the gripping device, the jaws of the pair of tongs enter the space between the neck joint and the adjacent cervical vertebra. The neck joint is thereby loosened, but it remains on the fore end.

A knife, fitted on the tool, cuts the neck bone muscle loose from the neck bone, being guided down the bone along a line which mainly corresponds to the line L₁. The neck joint is not hampering for this operation, as it has been loosened. The neck bone muscle remains on the fore end (the neck fillet). If desired, this loosening operation of the neck bone muscle can be performed manually prior to the mechanized boning.

A saw in the tool cuts off the projection of the first cervical vertebra and the spinous processes, the saw being conveyed down the entire neck bone along a line which mainly corresponds to the line L₂. The saw is guided by the bone.

The ribs of the fore end are cut off by means of another saw in the tool. The sawing is performed close to the neck bone. The saw is guided on the neck bone and it follows a line which mainly corresponds to the line L₃.

If the neck bone 5 has not already been cut free by these operations, a cutting-off operation is performed by means of a sharp-ended knife fitted on the tool. The knife is conveyed along the underside of the neck bone. It can e.g. be V-shaped, so that the neck bone will run in the gap of the V.

All cutting operations are performed in the direction from the neck joint 6 or fixed point F₁ towards the remote end of the neck bone.

The fore end ribs (the ribs 7 and the chest bone 8) are cut off the fore end by means of a knife on the tool. It is conveyed along and guided by the underside of the ribs. The movement is inclined in relation to the longitudinal direction of the neck bone and it is directed away from the neck joint and the neck bone.

These cutting operations can be performed concurrently, e.g. so that knives and saws are carried forward in one movement from the neck joint to the remote end of the neck bone and the chest bone.

The cutting operations use the neck joint or the adjacent cervical vertebra as point of reference, and the cutting operations are guided by the bones that they are cutting free.

Left on the fore end will be the neck joint and perhaps small bones (spinous processes, small projections) which can be removed in a subsequent manual operation.

### Removal of shoulder blade

The shoulder blade 9 is found by means of a system determining the position of a fixed point F₂, located at a certain distance from the neck bone 5 and the first rib 7a. The position is found e.g. by means of a sensor which is moved along the neck bone at a certain distance until it hits the first rib.

A tool with a gripping device 4₂ is positioned in the direction of the arrow p₂ and is moved down towards the meat in the direction of the arrow P₂, the gripping device being pressed through the meat located over the shoulder blade and led down to the neck of the shoulder blade, which is gripped. The movement of the tool down towards the shoulder blade takes place in a direction which is mainly at right angles to the plane of the shoulder blade. Sinews on the neck are cut/torn by the jaws of the gripping device or by a device controlled by the tool.

A sharp-ended cutting device on the tool is moved down towards the neck of the shoulder blade and along the top side of the blade, guided by this, along a line which mainly corresponds to the line L₄. By this operation the top side of the shoulder blade is cut free.

Another sharp-ended cutting device on the tool is moved, guided by the gripping device 4₂, down towards and through the joint between the head of the shoulder blade and the humerus bone 10. The sinews around the head are cut through by the jaws of the gripping device or by a device controlled by the tool.

The shoulder blade 9 is extracted from the fore end by means of the gripping device, which is moved towards the shank side and neck end of the fore end in a path which forms an acute angle of e.g. 10-60° with the plane of the shoulder blade. The fore end is fixed during the extraction operation.

### Removal of shank bone and loosening of humerus bone

The shank bone 11 is found by means of a system which determines the position of the head of the shank bone as a fixed point F₃. A tool with a gripping device 4₃ is positioned in the direction of the arrow p₃ and is led towards the head of the bone in the direction of the arrow P₃, i.e. mainly in the same direction as the longitudinal direction of the bone. The gripping device is moved in to the fixed point and it grips around the bone, so that the free end of the shank bone is fixed right under the head. The sinews of this part of the neck are cut/torn by the jaws of the gripping device or by a device which is controlled by the gripping device.

The tool is fitted with a sharp-ended cutting device which is led along the bone, guided by this and along a line which mainly corresponds to the line L₅. The device stops when it hits the bone head in the opposite end of the shank bone, but before that, it breaks the sinew of the joint between the shank bone and the humerus bone. A V-shaped knife can be used, so that the bone runs in the gap of the V.

The tool can have a knife, which is moved together with the above-mentioned knife and cuts the meat over the bone 11. The two knives can be united into one knife the cross section of which has the shape of an inverted Y, so that the foot of the Y serves the purpose of cutting through the meat over the bone.

The gripping device 4₃ pulls the shank bone free from the fore end.

Before the bone is pulled free, and while the gripping device still has a grip of the shank bone, another gripping device 4₄ of the tool can move in and fix the head of the humerus bone closest to the shank bone. The sinews on this part of the humerus bone can be cut/torn by the jaws of the gripping device or by a device which is controlled by the tool. A cutting device which is sharp-ended and fitted on the tool is then led along the bone, guided by this and along a line which mainly corresponds to the line L₆. It stops when it hits the head of the humerus bone at the opposite end of the bone. A V-shaped knife can be used.

A knife on the tool can be moved forward together with the first mentioned knife and cut through the meat on the bone. The two knives can be united into one knife, the cross section of which has the shape of an inverted Y. The humerus bone 10, one end of which is still held by joint sinews in the fore end, is then turned by the gripping device, so that the loosened end of the bone projects from the meat. The gripping device 4₄ can now release the bone.

The humerus bone is not removed in the mechanized process described, as there are parts at the bone end being held in the meat (gristle, sinews etc.) which are difficult to work on. The humerus bone will be removed in a subsequent manual operation.

The almost boned fore end is conveyed out of the work station by releasing the fixation, removal of the stop plates 3 and setting the conveyor belt 2 in motion. The fore end can then be led to a manual processing or to a de-rinding machine, in which a fully-automatic or semi-automatic de-rinding operation is performed.

The manual processing can take place in the usual boning rooms. The fore end is trimmed and a manual removal of remaining parts of bones and gristles (spinous processes, humerus bone, gristle, etc.) is performed. The boned fore end is now in the same state as a fore end which has been boned manually, and it can be divided up into the desired traditional > muscles and meat cuts, i.e. neck fillet, shoulder, jowl, neck muscle, etc.

## Claims

1. Method for mechanically boning a fore end comprising the operations of removing the shank bone from a fore end, characterized in that the operation comprises the steps of:
(a) orientation and fixation of a fore end (1),
(b) determining the position (F₃) of the visible head of the shank bone, preferably in a plane which is at right angles to the longitudinal direction of the shank bone,
(c) positioning a first tool (4₃) in relation to the head,
(d) moving the tool in to the head and bringing the tool to grip around said head,
(e) guided by the shank bone (11), performing a cutting operation along the bone by means of a device which is mounted on the tool (4₃), while retaining the grip of the tool around the head during this cutting operation and the cutting operation mentioned below,
(f) guided by the shank bone (11), performing a cutting operation through the meat located above the bone by means of a device which is mounted on the tool (4₃), if desired, and
(g) removing the shank bone (11) from the fore end by means of the tool, which then releases the bone.

2. Method according to Claim 1, wherein the humerus bone is loosened from a fore end in an operation which after the steps (a) to (f) further comprises the steps of:
- moving a second tool (4₄) in to the head of the humerus bone (10) adjacent to the shank bone and bringing the tool to grip around the head, while retaining the grip of the first tool (4₃) around the visible head of the shank bone,
- guided by the humerus bone (10), performing a cutting operation along this by means of a device which is mounted on the tool (4₄),
- guided by the humerus bone (10), performing a cutting operation through the meat located above the bone, if desired, by means of a device which is mounted on the tool (4₄),
- performing step (g), and
- turning the humerus bone (10) by means of the second tool (4₄), so that one end projects from the meat, after which the tool releases the bone.

3. Method according to Claim 1 or 2, wherein the tools (4₃, 4₄) are designed to cut/tear sinews at the area of the bone where the tool grips around the bone.

## Patentansprüche

1. Verfahren zum mechanischen Ausbeinen eines Vorderteils, aufweisend den Arbeitsschritt des Entfernens des Unterschenkelknochens aus einem Vorderteil, dadurch gekennzeichnet, daß der Arbeitsschritt die folgenden Schritte aufweist:
a) Ausrichten und Fixieren eines Vorderteils (1),
b) Bestimmen der Position (F₃) des sichtbaren Kopfs des Unterschenkelknochens, vorzugsweise in einer Ebene im rechten Winkel zur Längsrichtung des Unterschenkelknochens,
c) Positionieren eines ersten Werkzeugs (4₃) in Bezug auf den Kopf,
d) Bewegen des Werkzeugs in den Kopf hinein und Umgreifenlassen des Kopfs durch das Werkzeug,
e) Ausführen eines vom Unterschenkelknochen (11) geführten Schneidvorgangs entlang des Knochens mit Hilfe einer auf dem Werkzeug (4₃) angebrachten Vorrichtung bei gleichzeitigem Aufrechterhalten des Umgreifens des Kopfs durch das Werkzeug während dieses Schneidvorgangs und des unten erwähnten Schneidvorgangs,
f) Ausführen eines vom Unterschenkelknochen (11) geführten Schneidvorgangs durch das Fleisch oberhalb des Knochens hindurch mit Hilfe einer auf dem Werkzeug (4₃) angebrachten Vorrichtung, falls gewünscht, und
g) Entfernen des Unterschenkelknochens (11) aus dem Vorderteil mit Hilfe des Werkzeugs, das dann den Knochen freigibt.

2. Verfahren nach Anspruch 1, dadurch gekennzeichnet, daß der Humerusknochen von einem Vorderteil in einem Arbeitsschritt gelöst wird, der nach den Schritten (a) bis (f) außerdem die folgenden Schritte aufweist:
• Bewegen eines zweiten Werkzeugs (4₄) in den Kopf des Humerusknochens (10) neben dem Unterschenkelknochen hinein und Umgreifenlassen des Kopfs durch das Werkzeug bei gleichzeitigem Aufrechterhalten des Umgreifens des sichtbaren Kopfs des Unterschenkelknochens durch das erste Werkzeug (4₃),
• Ausführen eines vom Humerusknochen (10) geführten Schneidvorgangs an ihm entlang mit Hilfe einer auf dem Werkzeug (4₄) angebrachten Vorrichtung,
• Ausführen eines vom Humerusknochen (10) geführten Schneidvorgangs durch das Fleisch oberhalb des Knochens hindurch mit Hilfe einer auf dem Werkzeug (4₄) angebrachten Vorrichtung, falls gewünscht,
• Ausführen von Schritt (g), und
• Drehen des Humerusknochens (10) mit Hilfe des zweiten Werkzeugs (4₄), so daß ein Ende vom Fleisch vorspringt, woraufhin das Werkzeug den Knochen freigibt.

3. Verfahren nach Anspruch 1 oder 2, dadurch gekennzeichnet, daß die Werkzeuge (4₃, 4₄) so gestaltet sind, daß sie Sehnen in dem Knochenbereich durchschneiden bzw. zerreißen, wo das Werkzeug den Knochen umgreift.

## Revendications

1. Procédé de désossement mécanique d'une extrémité avant comprenant des opérations d'extraction du tibia d'une extrémité avant, caractérisé en ce que l'opération comprend les étapes suivantes :
(a) l'orientation et la fixation d'une extrémité avant (1),
(b) la détermination de la position (F₃) de la tête visible du tibia, de préférence dans un plan qui est perpendiculaire à la direction longitudinale du tibia,
(c) le positionnement d'un premier outil (4₃) par rapport à la tête,
(d) le déplacement de l'outil dans la tête et la mise de l'outil en position de serrage autour de la tête,
(e) l'exécution, avec guidage par le tibia (11), d'une opération de coupe le long de l'os à l'aide d'un dispositif monté sur l'outil (43), avec retenue du serrage de l'outil autour de la tête pendant cette opération de coupe et l'opération de coupe indiquée dans la suite,
(f) l'exécution, avec guidage par le tibia (11), d'une opération de coupe de la viande placée au-dessus de l'os à l'aide d'un dispositif monté sur l'outil (4₃) le cas échéant, et
(g) l'extraction du tibia (11) de l'extrémité avant à l'aide de l'outil, qui libère alors l'os.

2. Procédé selon la revendication 1, dans lequel l'humérus est dégagé d'une extrémité avant dans une opération qui, après les étapes (a) à (f) comporte en outre les étapes suivantes :
- le déplacement d'un second outil (4₄) dans la tête de l'humérus (10) près du tibia et la mise de l'outil en position de serrage autour de la tête avec retenue du serrage de la tête visible du tibia par le premier outil (4₃),
- l'exécution, avec guidage par l'humérus (10), d'une opération de coupe le long de celui-ci à l'aide d'un dispositif monté sur l'outil (4₄),
- l'exécution, avec guidage par l'humérus (10), d'une opération de coupe de la viande placée au-dessus de l'os le cas échéant à l'aide d'un dispositif monté sur l'outil (4₄),
- l'exécution de l'étape (g), et
- la rotation de l'humérus (10) à l'aide du second outil (4₄) afin qu'une première extrémité dépasse de la viande, puis la libération de l'outil par l'os.

3. Procédé selon l'une des revendications 1 et 2, dans lequel les outils (4₃, 4₄) sont destinés à couper-déchirer les tendons dans la région de l'os dans laquelle l'outil assure le serrage autour de l'os.
